# EUROPEAN PATENT SPECIFICATION

(11) **EP 0 718 141 B1**
(45) Date of publication and mention of the grant of the patent: **07.04.1999**
(21) Application number: 95120046.8
(22) Date of filing: 19.12.1995
(51) Int. Cl.: B60K 26/02, G05G 1/14, F02D 11/04

(54) **Pedal-operated actuating member for controlling the pull cable connected to the throttle valve of a fuel-feed device in an internal combustion engine**
Pedalbetätigungsvorrichtung zur Steuerung des Bowdenzugs der Drosselklappe einer Brennstoffzufuhrvorrichtung für Brennkraftmaschine
Dispositif d'actionnement à pédale pour commander le câble lié au papillon d'un dispositif d'alimentation en carburant d'un moteur à combustion interne

(30) Priority: 23.12.1994 IT TO940260 U
(43) Date of publication of application: 26.06.1996
(73) Proprietor: FIAT AUTO S.p.A., 10135 Torino (IT)
(72) Inventor: Friso, Angelo, I-10064 Pinerolo (IT); Mongiano, Riccardo, I-10151 Torino (IT)
(74) Representative: Plebani, Rinaldo

(56) References cited:
- EP-A- 0 381 050
- DE-C- 3 221 102
- FR-A- 2 301 403
- PATENT ABSTRACTS OF JAPAN vol. 010 no. 265 (M-515) ,9 October 1986 & JP-A-61 089130 (NISSAN) 5 July 1986,
- PATENT ABSTRACTS OF JAPAN vol. 6 no. 236 (M-173) [1114] ,25 November 1982 & JP-A-57 135239 (NISSAN) 20 August 1982,

## Description

The present model relates to a pedal-operated actuating member for controlling the pull cable connected to the throttle valve of a fuel-feed device in an internal combustion engine.

Members of this type basically comprise a lever, to one end of which the abovementioned pedal is fixed, and which pivots around a pin fixed relative to the body of the motor vehicle. The other end of the lever is connected to the pull cable which normally actuates the throttle valve of a throttle body of a fuel-feed device in an internal combustion engine. The abovementioned pull cable, which may simply consist of a Bowden cable, or of any other suitable kinematic system, normally connects the end of a pivoting lever secured to the shaft of the throttle valve to the abovementioned end of the lever to which the pedal is fixed.

When the driver of the motor vehicle actuates the pedal, he causes the lever to rotate and, therefore, via the abovementioned pull cable, also causes the throttle valve to rotate; in order to limit the maximum distance which the pedal lever can travel, a stop is normally provided which is fixed to the body of the motor vehicle so that the maximum angle of rotation of the throttle valve is limited and overloading, by the pull cable, of the members actuated by the latter is avoided.

Actuating members of this type present certain disadvantages.

Firstly, the abovementioned device for stopping the pedal lever has to be able to suitably adjusted with respect to the vehicle body in order to avoid overloading the aforesaid members of the throttle body: this is because the distance between the two attachment points of the pull cable, one of which is located on the lever attached to the throttle valve and the other to the pedal lever, is subject to variations, which can be quite substantial, on account of the tolerances in the kinematic chain which connects the two abovementioned points.

Moreover, variations in the abovementioned length can quite easily occur in the course of the motor vehicle's life. The abovementioned stop device therefore needs to be checked frequently, both in order accurately to adjust the end-of-travel position of the pedal lever as a function of the overall tolerances of the pull cable, and in order to compensate for the variations, which occur quite normally during running of the vehicle, in the length between the aforesaid attachment point of the pull cable.

The operations involved in making these adjustments are somewhat tricky and awkward and, if they are neglected, the kinematic systems which control the throttle valve may be overloaded.

Devices are also known which regulate the actuating stroke of the pedal lever and which basically comprise a spring located in a casing which is inserted along the pull cable which controls the throttle valve; with these devices, if the pull cable or, in particular, the abovementioned casing breaks, this causes a sudden variation in the position of the throttle which results in the latter opening up further, and therefore adversely affects the vehicle's behaviour.

The object of the present model is to produce a pedal-operated actuating member for controlling the pull cable connected to the throttle valve of a fuel-feed device in an internal combustion engine which does not give rise to the disadvantages described above and which, in particular, does away with the abovementioned adjustable stop between the pedal lever and the vehicle body and the resulting adjustment operations, and avoids overloading the kinematic systems which control the throttle valve in all running conditions of the vehicle.

These objects are achieved with a pedal-operated actuating member for controlling the pull cable connected to the throttle valve of a fuel-feed device in an internal combustion engine, basically comprising a lever, to one end of which the said pedal is fixed, and which pivots around a pin fixed relative to the body of the motor vehicle, characterized in that it comprises a pivoting frame connected in a hinged manner to the said lever, and fitted with an attachment element designed to be connected to the said pull cable and with a pair of abutment surfaces designed to engage with corresponding surfaces on the said lever in order to enable the said frame to pivot between a first and a second position in which a first and a second of the said abutment surfaces on the frame are in contact with a corresponding abutment surface on the lever, an elastic element of predetermined rigidity being inserted between the said pivoting frame and the said lever, so that, in the rest position of the actuating member, the said first abutment surface on the frame is held against the corresponding abutment surface on the lever with a predetermined preloading.

In order to permit a clearer understanding of the concept of the present model, a more detailed description thereof will now be given by way of example and with reference to the figures in the appended drawings in which:
Figure 1 shows a partially sectioned side view of the pedal-operated actuating member of the model in a first operational position which corresponds, for example, to the maximum angle of opening of the throttle;
Figure 2 shows another side view, similar to that of the preceding figure, in which the actuating member is in a second operational position obtained by pressing the said member down further;
Figure 3 shows a partial view of the actuating member of the model, which view is basically perpendicular to that shown in Figure 1.

The actuating member of the model basically comprises a lever 1 to one end of which a pedal 3 is fixed; this lever pivots around a pin 4 fixed relative to the body 5 of the motor vehicle. The abovementioned lever has another end 6 which is located at the opposite end, relative to the pivot pin 4, to the end 2 to which the pedal 3 is fixed.

The actuating member of the model also comprises a pivoting frame 7 which is connected via a hinge pin to the end 6 of the lever 1 and which is fitted with an attachment element 11 designed to be connected to one end of the actuating pull cable 12.

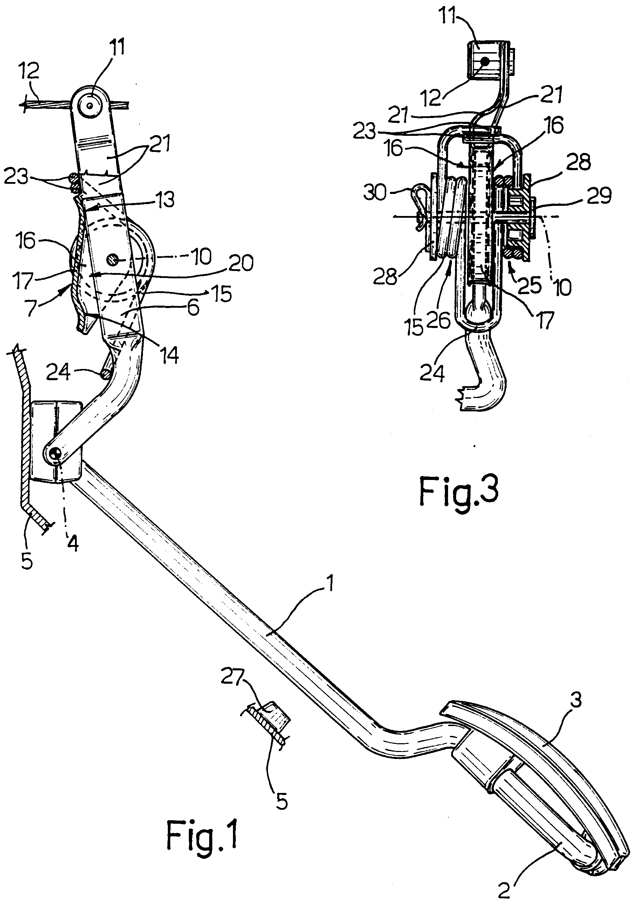

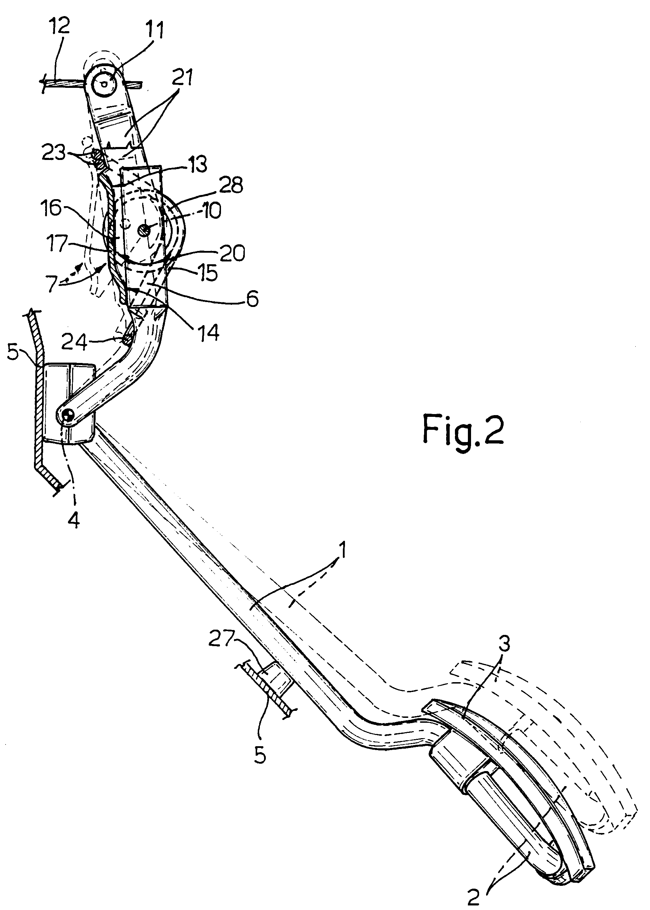

The frame 7 basically comprises a pair of abutment surfaces 13 and 14 designed to engage with corresponding surfaces on the end 6 of the lever 1 in order to enable the said frame to pivot between a first position, shown in Figure 1, in which the abutment surface 13 is in contact with the abovementioned end, and a second position, shown in Figure 2, in which the abutment surface 14 is in contact with the same end 6 of the lever. A spring or any other elastic element 15, of predetermined rigidity, is inserted between the pivoting frame 7 and the end 6 of the lever, so that, in the rest position of the actuating member, the abutment surface 13 is held against the corresponding abutment surface on the end 6 of the lever with a predetermined preloading, as may be seen in Figure 1.

The pivoting frame 7 is basically U-shaped and comprises two wings 16 which project from a base wall 17 and basically define a cavity 20 inside which the end 6 of the lever 1 is housed. Advantageously, the abutment surfaces 13 and 14 are made by suitably shaping, in the manner shown in Figures 1 and 2, the base wall 17 of the said frame.

Each of the wings 16 comprises a corresponding projecting tongue 21; the two tongues 21 are suitably shaped so that they overlap, as may be clearly seen in Figure 3, and a peg 11 is fixed to their end so that the pull cable 12 can be attached.

The pivoting frame 7 may be shaped in any other appropriate way, as long as it is provided with the two abutment surfaces 13 and 14; even the point at which it is hinged to the lever 1 may be located at a point other than that indicated by the axis of the hinge 10.

Even though in the embodiment shown in the figures, the pivoting frame 7 is hinged to the lever 1 at a point 10 on the said lever which is located at the opposite end, relative to the pin 4, to that bearing the pedal 3, this pivoting frame can be hinged to the said lever in the region of the pin 4 around which the lever pivots.

Advantageously the spring 15 is a helical torsion spring which is mounted basically coaxial with the axis of the hinge 10 which connects the pivoting frame 7 to the end 6 of the lever; advantageously, and as may be clearly seen in Figure 3, the said lever is shaped so that it forms two arms 23 and 24, the first 23 of which is connected to the pivoting frame 7 and the other 24 to the lever 1. Advantageously the arm 24 is made by shaping the wire of the spring located between two sets of turns 25 and 26 (Figure 3) of the spring and the other arm by shaping the two free ends of the spring. The spring is advantageously guided on a support 28 which is fixed to the frame 7 with a peg 29; an end split pin 30 secures the peg 29 axially.

The spring 15 is suitably preloaded, and its preloading and its rigidity are chosen such that, during the travel of the pedal 3 required to move the throttle valve from the closed position to that of maximum opening, the frame 7 remains in the configuration shown in Figure 1, in which the abutment surface 13 is held in contact against the corresponding surface on the end 6 of the lever 1.

A device 27 for stopping the lever 1 is fixed to the vehicle body 5.

The actuating member described is operated in the following way.

In the rest position of the actuating member, the pull cable 12 exerts a force on the peg 11 which is sufficient to keep the lever 1 rotated in a position in which the pedal 3 is located in its end-of-upward-travel position. During normal actuation of the pedal 3, the lever 1 is made to rotate in a clockwise direction in Figure 1 and, therefore, a force is applied to the pull cable 12 which is sufficient to cause the throttle valve to open until it reaches the position of maximum opening, which could correspond to that shown in Figure 1. During this rotation of the throttle, as has already been stated, on account of the preloading and the rigidity of the spring 15, the frame 7 is held in the configuration shown in Figure 1, in which the abutment surface 13 is in contact with the end 6 of the lever 1. If, after having reached the abovementioned position of maximum opening of the throttle, the driver of the motor vehicle were to press the pedal 3 down further, the lever 1 is able to rotate further, passing from the configuration shown in Figure 1 to that shown in Figure 2, during which the position of the peg 11 connected to the end of the pull cable 12 remains basically unchanged, and only a relative rotation of the lever 1 with respect to the frame 7 takes place. At the end of the abovementioned rotation, the end 6 of the lever 1 is brought into contact with the abutment surface 14, as has been shown in Figure 2.

When passing from the configuration shown in Figure 1 to that shown in Figure 2, and even though the pedal 3 is pushed down further, thereby causing a rotation of the lever 1, no overload is applied to the actuating members of the throttle valve since, during this rotation, the only force to act on the pull cable 12 is that generated by the spring 15, which is dependent on the rigidity and preloading of the latter, characteristics which can be chosen to suit.

The stop 27 which is fixed to the body of the motor vehicle is located so that further rotation of the lever 1 is prevented once the end 6 of the lever has been brought into contact with the abutment surface 14 of the frame 7.

The actuating member of the model therefore prevents any overloading of the members of the fuel-feed device controlled by the pull cable 12; in addition, any tolerances in the kinematic chain can be compensated for by relative rotation of the frame 7 with respect to the lever 1 between the two end-of-travel positions provided by the abutment surfaces 13 and 14; in a similar way, variations in the length between the attachment points of the pull cable 12 can be compensated for without having to regulate the end-of-travel position of the lever 1 by inserting adjustable stops between the said lever and the vehicle body.

Modifications and variations, whether with respect to shape or arrangment of the various parts, may be made to the described embodiment of the actuating member of the present model, without thereby departing from the scope of the model itself.

## Claims

1. Pedal-operated (3) actuating member for controlling the pull cable (12) connected to the throttle valve of a fuel-feed device in an internal combustion engine, basically comprising a lever (1), to one end (2) of which the said pedal is fixed, and which pivots around a pin (4) fixed relative to the body (5) of the motor vehicle, characterized in that it comprises a pivoting frame (7) connected in a hinged manner (10) to the said lever, and fitted with an attachment element (11) designed to be connected to the said pull cable and with a pair of abutment surfaces (13, 14) designed to engage with corresponding surfaces on the said lever (1) in order to enable the said frame (7) to pivot between a first and a second position in which a first (13) and a second (14) of the said abutment surfaces on the frame are in contact with corresponding abutment surfaces on the lever (1), an elastic element (15) of predetermined rigidity being inserted between the said pivoting frame (7) and the said lever (1), so that, in the rest position of the actuating member, the said first abutment surface (13) on the frame is held against the corresponding abutment surface on the lever (1) with a predetermined preloading.

2. Actuating member according to Claim 1, characterized in that the said elastic element (15) is a spring.

3. Actuating member characterized in that the said pivoting frame (7) is hinged to the said lever at a point (10) on the lever which is located at the opposite end, relative to the said pin (4), to that bearing the said pedal (3).

4. Actuating member according to Claim 1, characterized in that the said pivoting frame (7) is hinged to the said lever in the region of the said pin (4) around which the said lever (1) pivots.

5. Actuating member according to one of the preceding claims, characterized in that the said pivoting frame (7) is basically U-shaped and comprises two wings (16) which project from a base wall (17) and define a cavity (20) inside which the free end (6) of the said lever is housed.

6. Actuating member according to Claim 5, characterized in that the said first (13) and second (14) abutment surfaces on the said pivoting frame (7) are formed on the said base wall (17) of the frame.

7. Actuating member according to Claim 5 or 6, characterized in that each of the said wings (16) comprises a projecting tongue (21), the said attachment element (11) being connected to the said tongues (21).

8. Actuating member according to one of the preceding claims, characterized in that the said spring (15) is a helical torsion spring which is mounted basically coaxial with the axis of the said hinge (10) which connects the said pivoting frame (7) to the said lever (1), the said spring (15) being shaped so that it forms two arms (23, 24), one (24) of which is connected to the lever and the other (23) to the frame.

9. Actuating member according to Claim 8, characterized in that the first (24) of the said arms is made by shaping the wire of the spring (15) located between two sets (25, 26) of turns of the spring, and the other arm (23) by shaping the two free ends of the spring.

## Patentansprüche

1. Pedalbetätigtes Betätigungselement (3) zum Steuern eines Seilzuges (12), der mit einer Drosselklappe einer Kraftstoffzuführungsvorrichtung in einer Brennkraftmaschine verbunden ist, mit einem Hebel (1), bei dem an einem Ende (2) das Pedal befestigt ist und der sich um einen Stift (4) dreht, der bezüglich der Karosserie (5) des Kraftfahrzeuges fixiert ist, dadurch gekennzeichnet, daß es versehen ist mit einem Gelenkrahmen (7), der ähnlich einem Scharnier (10) mit dem Hebel verbunden ist und versehen ist mit einem Befestigungselement (11), das mit dem Seilzug verbunden ist, und mit zwei Stoßflächen (13, 14), die mit den entsprechenden Flächen auf dem Hebel (1) in Eingriff kommen, um zu ermöglichen, daß der Rahmen (7) zwischen einer ersten und einer zweiten Position geschwenkt wird, in welchen eine erste (13) und eine zweite (14) der Stoßflächen am Rahmen mit den entsprechenden Stoßflächen am Hebel (1) in Kontakt sind, einem elastischen Element (15) mit vorgegebener Härte, das zwischen dem Gelenkrahmen (7) und den Hebel (1) eingesetzt ist, so daß in der Ruheposition des Betätigungselements die erste Stoßfläche (13) am Rahmen mit einer vorgegebenen Vorspannung an der entsprechenden Stoßfläche am Hebel (1) gehalten wird.

2. Betätigungselement nach Anspruch 1, dadurch gekennzeichnet, daß das elastische Element (15) eine Feder ist.

3. Betätigungselement, dadurch gekennzeichnet, daß der Gelenkrahmen (7) am Hebel an einem Punkt (10) am Hebel angelenkt ist, der bezüglich des Stiftes (4) an dem dem Lager des Pedals (3) gegenüberliegenden Ende angeordnet ist.

4. Betätigungselement nach Anspruch 1, dadurch gekennzeichnet, daß der Gelenkrahmen (7) am Hebel in dem Bereich des Stiftes (4) angelenkt ist, um den sich der Hebel (1) dreht.

5. Betätigungselement nach einem der vorangehenden Ansprüche, dadurch gekennzeichnet, daß der Gelenkrahmen (7) im wesentlichen U-förmig ist und zwei Schenkel (16) umfaßt, die von einer Basiswand (17) hervorstehen und einen Hohlraum (20) definieren, in dem das freie Ende (6) des Hebels aufgenommen ist.

6. Betätigungselement nach Anspruch 5, dadurch gekennzeichnet, daß die ersten (13) und zweiten (14) Stoßflächen am Gelenkrahmen (7) auf der Basiswand (17) des Rahmens ausgebildet sind.

7. Betätigungselement nach Anspruch 5 oder 6, dadurch gekennzeichnet, daß jeder der Schenkel (16) eine vorstehende Zunge (21) umfaßt, wobei das Befestigungselement (11) mit den Zungen (21) verbunden ist.

8. Betätigungselement nach einem der vorangehenden Ansprüche, dadurch gekennzeichnet, daß die Feder (15) eine schraubenförmige Torsionsfeder ist, die im wesentlichen koaxial zur Achse des Scharniers (10) montiert ist, das den Gelenkrahmen (7) mit dem Hebel (1) verbindet, wobei die Feder (15) so geformt ist, daß sie zwei Arme (23, 24) bildet, von denen einer (24) mit dem Hebel und der andere (23) mit dem Rahmen verbunden ist.

9. Betätigungselement nach Anspruch 8, dadurch gekennzeichnet, daß der erste Arm (24) gebildet ist durch Formen des Drahtes der Feder (15), der zwischen den zwei Windungssätzen (25, 26) der Feder angeordnet ist, und der andere Arm (23) gebildet ist durch Formen der zwei freien Enden der Feder.

## Revendications

1. Elément d'actionnement mis en oeuvre par une pédale (3) pour commander le câble de traction (12) relié au papillon des gaz d'un dispositif alimenté par carburant dans un moteur à combustion interne, comprenant, à la base, un levier (1), ladite pédale étant fixée à une extrémité particulière (2) de ce dernier, et qui pivote autour d'un pivot fixe (4) par rapport au châssis (5) du véhicule à moteur, caractérisé en ce qu'il comprend un cadre pivotant (7) relié de façon articulée (10) audit levier, et équipé d'un élément de fixation (11) conçu pour être relié audit câble de traction et d'un couple de surfaces de butée (13, 14) conçues pour venir en contact avec des surfaces correspondantes sur ledit levier (1) afin de permettre audit cadre (7) de pivoter entre une première et une seconde position dans lesquelles une première (13) et une seconde (14) desdites surfaces de butée sur le cadre sont en contact avec des surfaces de butée correspondantes sur le levier (1), un élément élastique (15) de rigidité prédéterminée étant inséré entre ledit cadre pivotant (7) et ledit levier (1), de sorte que, dans la position au repos de l'élément d'actionnement, ladite première surface de butée (13) sur le cadre est maintenue contre la surface de butée correspondante sur le levier (1) avec une précharge prédéterminée.

2. Elément d'actionnement selon la revendication 1, caractérisé en ce que ledit élément élastique (15) est un ressort.

3. Elément d'actionnement caractérisé en ce que ledit cadre pivotant (7) est articulé audit levier au niveau d'un point (10) sur le levier qui est situé à l'extrémité opposée, par rapport audit pivot (4), à celle portant ladite pédale (3).

4. Elément d'actionnement selon la revendication 1, caractérisé en ce que ledit cadre pivotant (7) est articulé audit levier dans la zone dudit pivot (4) autour de laquelle ledit levier (1) pivote.

5. Elément d'actionnement selon l'une quelconque des revendications précédentes, caractérisé en ce que ledit cadre pivotant (7) a, à la base, une forme de U et comprend deux ailes (16) qui dépassent d'une paroi de base (17) et définissent une cavité (20) à l'intérieur de laquelle l'extrémité libre (6) dudit levier est logée.

6. Elément d'actionnement selon la revendication 5, caractérisé en ce que lesdites première (13) et seconde (14) surfaces de butée sur ledit cadre pivotant (7) sont formées sur ladite paroi de base (17) du cadre.

7. Elément d'actionnement selon la revendication 5 ou 6, caractérisé en ce que chacune desdites ailes (16) comprend une languette en saillie (21), ledit élément de fixation (11) étant relié auxdites languettes (21).

8. Elément d'actionnement selon l'une quelconque des revendications précédentes, caractérisé en ce que ledit ressort (15) est un ressort hélicoïdal de torsion qui est monté, à la base, de façon coaxiale avec l'axe de ladite articulation (10) qui relie ledit cadre pivotant (7) audit levier (1), ledit ressort (15) ayant une certaine forme de sorte qu'il forme deux bras (23, 24), l'un (24) étant relié au levier et l'autre (23) au cadre.

9. Elément d'actionnement selon la revendication 8, caractérisé en ce que le premier (24) desdits bras est réalisé en mettant en forme le fil métallique du ressort (15) situé entre deux jeux (25, 26) de spires du ressort, et l'autre bras (23) en mettant en forme les deux extrémités libres du ressort.
